## Europäisches Patentamt
## European Patent Office
## Office européen des brevets

(19)

(11) Publication number: **0 075 625**
**B1**

(12) # EUROPEAN PATENT SPECIFICATION

(45) Date of publication of patent specification: **10.12.86**

(51) Int. Cl.⁴: **G 06 F 13/14, H 04 L 11/16**

(21) Application number: **81304490.6**

(22) Date of filing: **29.09.81**

(54) Conversation bus for a data processing system.

(43) Date of publication of application:
**06.04.83 Bulletin 83/14**

(45) Publication of the grant of the patent:
**10.12.86 Bulletin 86/50**

(84) Designated Contracting States:
**BE DE FR GB IT NL**

(56) References cited:
GB-A-2 064 920
GB-A-2 068 690
US-A-4 038 644

IBM TECHNICAL DISCLOSURE BULLETIN, vol. 21, no. 4, September 1978, pages 1388-1390, New York (USA); M.C. GROVE: "Peer communications network".

3rd USA-JAPAN COMPUTER CONFERENCE PROCEEDINGS, 10th-12th October 1978, San Francisco, AFIPS & IPSJ, Baltimore (USA); G.S. CHRISTENSEN et al.: "Design and analysis of the access protocol for hyperchannel networks". Sessions 4.4.1/4.4.8, pages 86-93. Fall Joint Computer Conference, 1972, pages 719-740

(73) Proprietor: BURROUGHS CORPORATION (a Delaware corporation)
Burroughs Place
Detroit Michigan 48232 (US)

(72) Inventor: **Potash, Hanan**
6923 Paseo Laredo
La Jolla California 92034 (US)
Inventor: **Genter, Mel**
17904 Aguamiel
San Diego California 92127 (US)

(74) Representative: **Kirby, Harold Douglas Benson et al**
G. F. Redfern & Company Marlborough House
14 Farncombe Road
Worthing West Sussex BN11 2BT (GB)

(56) References cited:
ELEKTRONIK, vol. 30, no. 7, 1981, pages 89-94, München (DE); R. KIND: "12C-Bus: Verteilte Intelligenz auch in Geraten".

IBM TECHNICAL DISCLOSURE BULLETIN, vol. 22, no.9, February 1980, pages 4189-4190, New York (USA); C.G. LANGDON Jr.: "Edge-selection circuit".

## Description

This invention relates to digital data processing systems which are comprised of a plurality of devices that send messages to each other over a time-shared bus. Each device in the system may be any type of digital equipment. For example, one device might be a digital processor, another device might be a disc, another device might be a printer, etc.

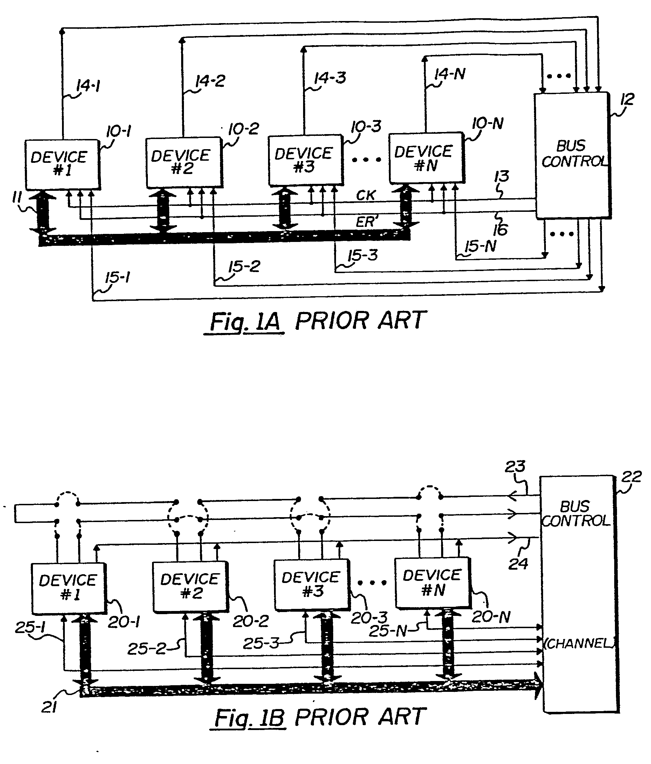

One such prior art digital processing system, which is utilized by NCR, is illustrated in Figure 1A. There, the plurality of devices are indicated by reference numerals 10-1 through 10-N; and the time-shared bus over which they send messages is indicated by reference numeral 11. All message transfers on bus 11 are synchronized by a fixed frequency clock signal which is generated by a bus controller 12 on a line 13.

Controller 12 also determines the priority by which the devices send messages over bus 11. To that end, controller 12 receives a "request" signal from each device over separate control lines 14-1 through 14-N; and it sends a "request granted" signal back to each device over separate control lines 15-1 through 15-N. These control lines are not time-shared by the devices.

Also, controller 12 monitors all messages on bus 11 to determine if a parity error occurs. If an error does occur, then controller 12 sends a signal on another separate control line 16 to the device which received the erroneous message.

An undesirable aspect of the Figure 1A system is that if a device receives a message which requires a response message to be sent, that response message cannot be sent immediately. Instead, the receiving device must first "ask" bus controller 12 if it can use the bus. Typically, several other devices will transmit messages on the bus before the receiving device is permitted to send its response. Thus communication between devices on bus 11 occurs in a random illogical order.

Another undesirable aspect of the Figure 1A system is that too many separate control lines are required for operating bus 11. These are lines 14-1 through 14-N, 15-1 through 15-N, and 16 as described above. This drawback is most severe for large systems, because the number of control lines increases as the number of devices increases.

Further, the Figure 1A system is totally dependent on bus controller 12 for its operation. That is, the system simply will not work when controller 12 needs repair. This is true even though devices 14-1 through 14-N may be completely operational.

Another prior art data processing system which includes a time-shared bus is illustrated in Figure 1B. That system is utilized by IBM. There, the devices are indicated by reference numerals 20-1 through 20-N; and the time-shared bus on which messages are sent is indicated by reference numeral 21. All message transfers occur between one of the devices and bus controller 22, which is also called a channel.

In operation, bus controller 22 sends spaced apart polling pulses down a separate control line 23. A path for these pulses to pass serially through each device is established by the placement of three jumper wires as indicated by dashed lines in Figure 1B. Any device may transmit a message to controller 22 only after it receives a polling pulse on line 23, blocks that pulse from traveling further down the line, and sends a signal on another control line 24 which tells controller 22 to stop generating pulses until the message is sent. Each device generates its own asynchronous clocking signals on respective lines 25-1 through 25-4 to transfer messages on bus 21. A device which has no message to send simply allows the pulses on line 23 to pass to the next device.

Once a device obtains the use of the bus 21, messages can be sent from that device to bus controller 22 and the controller can respond by immediately sending another message back to that same device. But the channel cannot respond by sending a message back to a second device. Also, one device cannot send a message directly to another device.

The IBM system does utilize fewer control lines than does the system of Figure 1A. But even so, the IBM system still requires some separate control lines and still depends on a separate bus controller for its operation. Further, the above reduction in control lines 1B are obtained only at the cost of making the priority by which a device may obtain the bus very inflexible. That priority is limited by the devices position on the bus. Device 20-4 can have either the first or last priority; device 20-3 can have either first or second or next-to-last or last priority; etc.

In addition to centralised bus control systems as shown in Figures 1A and 1B, systems are also known which use de-centralised bus control. Such systems are described, for example, in Fall Joint Computer Conference 1972, pages 719—740. This document describes a number of systems, some of which use semi-synchronous bus communication. In such systems there is no global timing signal available to all devices, and accordingly pseudo clock signals are generated when the bus is idle. A de-centrally-controlled bus requires that this function be performed by the last device to use the bus.

The present invention is concerned with a system of this general kind, and in particular is concerned with a digital data processing system comprising a plurality of digital devices, interconnected by a bus and a clock line. A clock signal is transmitted on said clock line by any device which is transmitting data to another of said devices over said bus. If said other of said devices receives said data and does not require to respond to it, it transmits a polling signal on said bus. The polling signal indicates to the device which has transmitted the data that the data has been correctly received, and it also indicates to all the devices that the bus is free.

IBM Technical Disclosure Bulletin, Vol. 21, No. 4, September 1978, pages 1388—1390 describes a bus protocol according to which a digital device, behaving as a master, transmits polling information. When any digital device sees this polling data it can initiate a transaction to another digital device. After a transaction is complete, the initiating device commands the target device to close the bus and this allows the initiating device to assume the role of master. This device then continues to transmit polling data to the bus.

GB—A—2 064 920 describes an industrial communications network which includes a plurality of microprocessor-based interface circuits which connect a general purpose controller, a programmable controller, a process controller and a numerical controller to a serial bus. Each interface circuit can assume mastership of the bus when the existing master generates a polling signal indicating that it is ready to relinquish mastership.

Third USA-Japan Computer Conference Proceedings, 10—12 October 1978, pages 86—93 describes a network having a microprocessor to administer a number of message buffers associated with a bus interface unit. The microprocessor executes programmes when one of the devices is a peripheral unit such as a disk. The microprocessor accepts messages, which it stores for subsequent execution, and is responsible for sending and receiving messages. Contention election mechanisms are implemented by placing contention counters in each bus interface.

GB—A—2 068 690 discloses a system for data communication among a plurality of digital processors via a data bus wherein any one of the processors may act as a master station to control the data bus, and can transfer control of the data bus to another processor requiring control of the bus.

In a system in accordance with the present invention the data bus comprises two sets of lines, the polling signal being transmitted on one of said sets of lines and the data being transmitted on the other set of lines. Both the polling signal and the data are transmitted as parallel codes. While the data is being transmitted on the second set of lines, a parallel code is also transmitted on the first set of lines in place of the polling signal. This parallel code identifies at each instant whether the data then being transmitted constitutes the first word, the last word or an intermediate word of a message. One line in the second set of lines is allocated to each of the devices, and any one of the devices requiring to transmit data examines the first set of lines to ascertain that the polling signal is being transmitted and, if it finds that the polling signal is being transmitted, it applies a steady signal to its respective allocated line in the second set to indicate that it has data to transmit. The device previously transmitting the polling signal then ceases to do so and the device which is taking control of the bus transmits the signal on the first set of lines which identifies the nature of the data which it is transmitting on the second set of lines.

Brief Description of the Drawings

Various features and advantages of the invention will best be understood by reference to the following detailed description and accompanying drawings wherein:

Figures 1A and 1B are block diagrams of prior art data processing systems.

Figure 2 is a block diagram of a data processing system constructed according to the invention.

Figures 3A and 3B are timing diagrams illustrating the operation of the data processing systems of Figure 2.

Figures 4A and 4B are detailed logic diagrams of that portion of a device which transmits messages in the data processing system of Figure 2.

Figures 5A and 5B are detailed logic diagrams of that portion of a device which receives messages in the data processing system of Figure 2.

Detailed Description

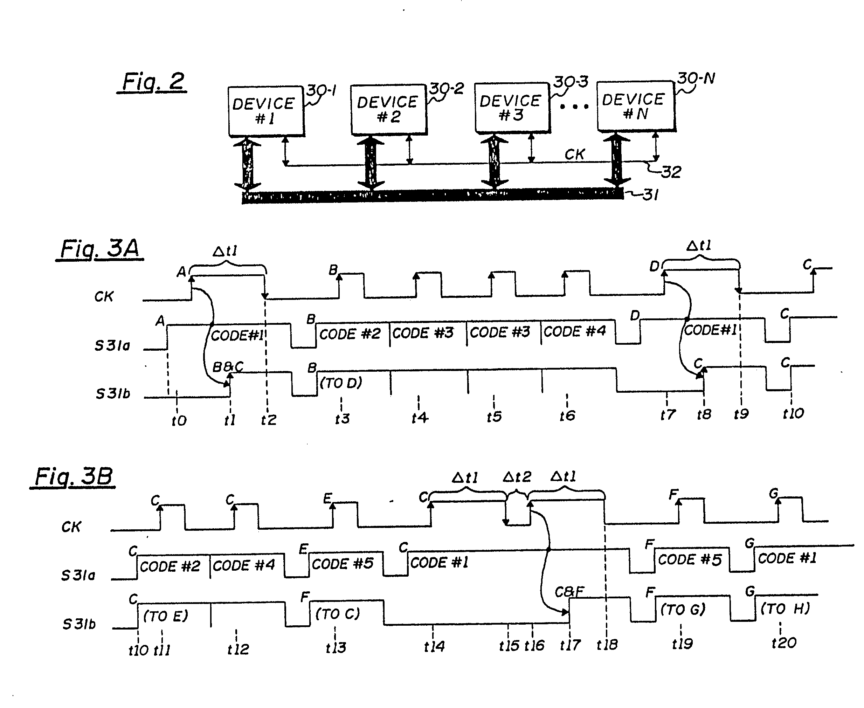

Referring now to Figure 2, the details of a preferred embodiment of a data processing system which is constructed according to the invention will be described. This embodiment includes a plurality of devices 30-1 through 30-N which communicate with each other over a time-shared bus 31. Each device may be any type of digital equipment, such as a data processor, a disc, a printer, etc. All messages on bus 31 are synchronized by a clock signal CK which is generated on a line 32 by the device that is transmitting messages on bus 31. No separate bus controller or separate control lines for obtaining the use of bus 31 exists in the system.

To understand how a device obtains the use of bus 31 and transmits a message thereon, consider now the timing diagrams of Figures 3A and 3B. In those figures, the letters A—G each represent the device which is generating a signal on bus 31 at a particular time instant. Also, signals S31a and S31b indicate steady signals which are generated on respective sets of lines 31A and 31B in bus 31. For example, at time instant t2, device A is generating clock signal CK on line 32 and steady signals on line 31A; whereas devices B and C are generating steady signals on leads 31B.

Assume initially that before time instant t0. device A has just received a message over bus 31 from another device. When that occurs, device A examines the message to determine if any further dialog on the bus is required. Additional dialog may be needed for example, if the received message was a request to write into a protected area, or if the message caused the receiver's input buffer to overflow, etc. If no further dialog is needed, device A then has the responsibility of generating a code #1 on lines 31A, and generating clock signal CK on line 32 with a predetermined width $\Delta t1$.

All devices which desire to transmit a message on bus 31, must respond to the concurrent occurrence of code #1 and the rising edge of signal CK by generating a steady signal on a respective one of the lines 31B. This is illustrated as occurring at time instant t1 where device B and C both generate signals on lines 31B. Thereafter, at the trailing edge of clock signal CK, all of the devices on the bus examine the state of the signals on lines 31B. This trailing edge is illustrated as occurring at time instant t2.

If a steady signal is generated by any device on any of the lines 31B, then device A stops generating clock signal CK and stops generating code #1 on lines 31A. Also, all of the devices which generated a steady signal on one of the lines 31B, examine the signal state of lines 31B to determine within themselves if they are the highest priority device. That device which is of the highest priority must then transmit its message over bus 31.

In the illustrated example, device B is presumed to be of higher priority than device C. It responds in the illustrated example by sending a four word message to device D. Signals S31A are sequentially encoded by device B as a code #2, a code #3, and a code #4 which respectively indicate that the first word of a multiple word message, a middle word of a multiple word message, and the last word of a multiple word message is being sent. Code #2 in combination with a portion of the signals on lines 31B also indicate which device is to receive the message.

All of the words of the message are synchronized by the rising edge of clocking signal CK which is generated by device B at time instants t3—t6. After device D has received the entire message, it examines the words to determine if any further communication is required. One other example of when that would be appropriate would be if device B sent the words of its message out of sequence — i.e., it sent first word, middle word, first word. If no further communication is needed, then device D has the responsibility of generating code #1 on lines 31A and simultaneously generating a clocking signal of width Δt1. This clocking signal is illustrated as beginning at time instant t7.

Device B, which previously sent the message to device D, also has the responsibility of examining lines 31A to determine whether or not device D generates a code #1 thereon. This code is interpreted by device B as an implicit indication that its message was received and no further communication is needed. All other devices on bus 31 and device B must also respond to code #1 as was previously described. That is, they must generate a steady signal level on a respective one of the lines 31B if they want to use bus 31. Device C is illustrated as sending a steady signal on one of those lines at time instant t8.

At the falling edge of clock signal CK, which is illustrated as occurring at time instant t9, both device C and D examine the signal state of lines 31B. Since one of those lines has a steady signal generated thereon, device D terminates its transmission of clock signal CK and code #1 on bus 31. Also since device C is the only device which is sending a steady state signal on lines 31, it begins its message transmission as illustrated at time instant t10.

Device C is illustrated as transmitting a two word message to device E. It accomplishes this transmission by sequentially generating code #2 and code #4 on lines 31A and simultaneously generating clocking signal CK at time instants t11 and t12.

Assume now that device E wants to reply with a single word message to device C. Device E does this by generating a code #5 on lines 31A and simultaneously generating clocking signal CK. This is illustrated at time instant t13. Device E also generates additional signals on lines 31B, which include the address of device C and the details of the message that it is sending to device C.

In response to the receipt of the code 5 message, device C is given control of bus 31. It then has the responsibility of communicating further with device E or any other device on bus 31, or of giving up the bus by broadcasting code #1 on lines 31A. In the illustrated example, device C performs the latter option at time instant t14.

In response to the code #1 broadcast, device E which was the last device to transmit on bus 31, again interprets that code as an implied indication that the code #5 message was received and further dialog is unnecessary. Also, all devices on bus 31 interpret code #1 as a polling code which has been described above.

Next, at time instant t15, device C examines the signals state on lines 31B to determine if any device has generated a steady signal thereon. In the illustrated example, none of the devices on bus 31 have requested its use. Under those conditions, device C has the responsibility of regenerating another polling cycle. This is illustrated as starting at time instant t16.

In response to the second polling cycle, devices C and F both make requests to use the bus by generating respective steady signals on lines 31B. That is, a device which generates code #1 can also respond to that code by generating a steady signal on one of the lines 31B. This is illustrated at time instant t17.

Subsequently at the trailing edge of clock signal CK, which occurs at time instant t18, devices C and F both examine the signal state of lines 31B. In this example, device F is presumed to have higher priority than device C. Thus device C terminates its generating of signals on the bus 31 and clock line 32, and device F begins its message transmission.

At time instant t19, device F is illustrated as transmitting a one word message to device G. Code #5 is again interpreted to mean a one word message. Thereafter, device F terminates its signaling on the bus 31 and clock line 32, and monitors the response which is generated on those lines by the receiving device G. This response which occurs at time instant t20, is illustrated as being a one word message to another device H. Device H then assumes control of the bus as described above.

An important feature of the above described data processing system is it permits uninterrupted conversations to occur on the bus among any number of devices. No biding for the bus is required each time a new device takes part in the conversation. This is achieved by having the device which received the last message assume control of the bus.

Another important feature of the above system is that it needs no separate bus controller for its operation. Instead, each device in the system shares in the responsibility of determining which device may use the bus. Thus, there is no separate bus controller which must be operable before the entire system can work. If one device needs repair, it can be taken off of the bus; and the system still operates at reduced capacity.

The disclosed system also requires absolutely no separate control lines to allocate the use of the bus. All lines are time-shared. This minimizes the total number of lines between devices, which simplifies cabling and reduces costs. Further, this is achieved without sacrificing the flexibility by which a device can be assigned a priority on the bus.

Also, in the disclosed system, message transmission is very efficient because fault or exception free messages are acknowledged without consuming any bus time. This is achieved by designing the device which transmitted the last message on bus 31 to interpret a poll code from the receiving device as an error free acknowledgement in addition to a polling cycle. Typically, faults or exceptions occur very infrequently and thus it is important to not degrade message throughput by taking bus time to acknowledge normal messages.

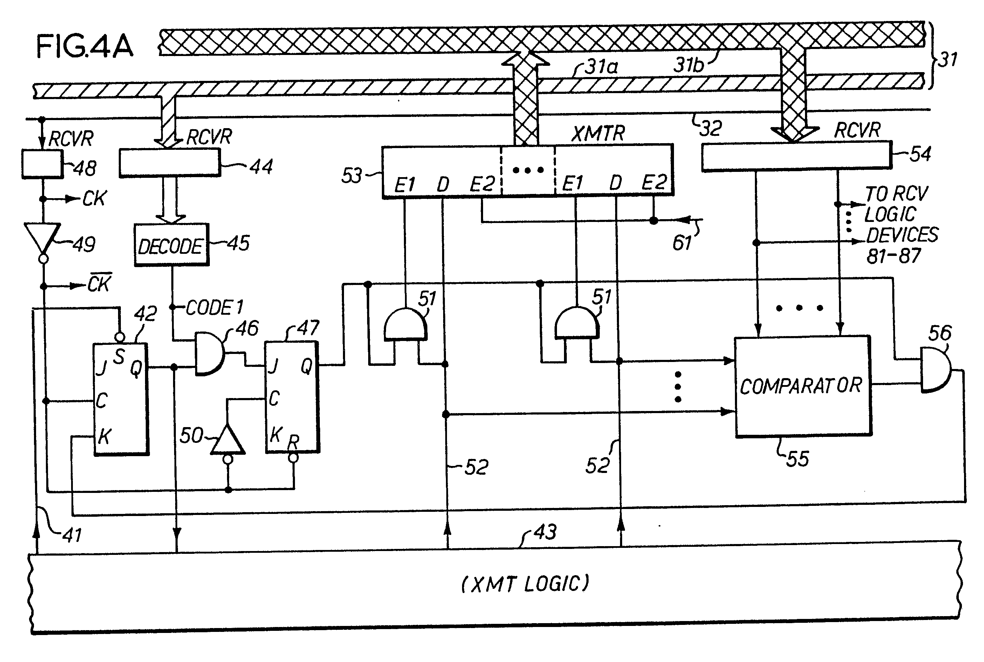

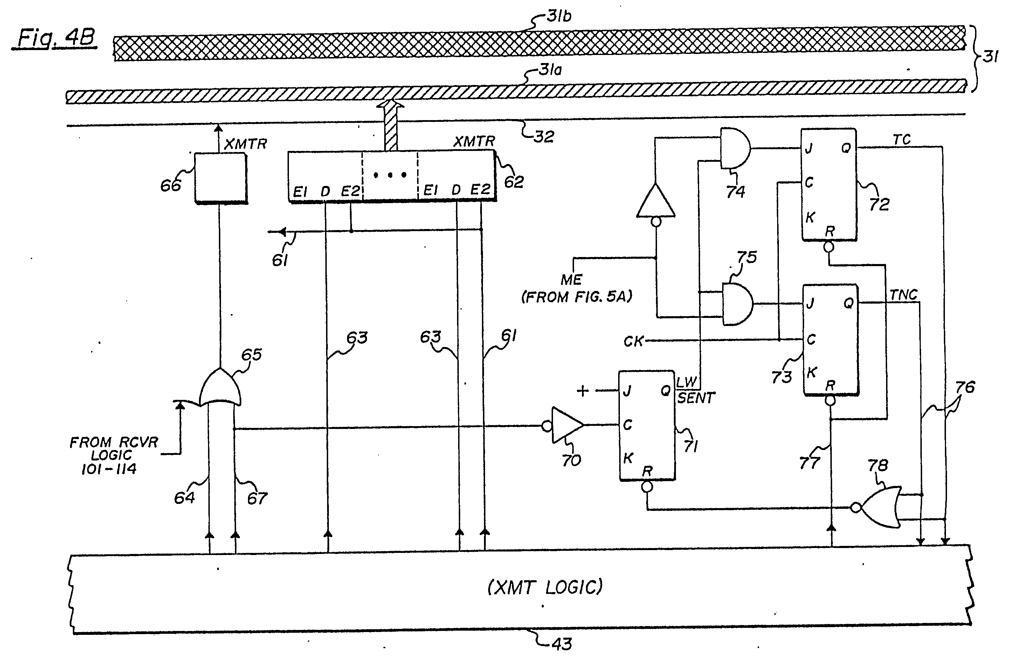

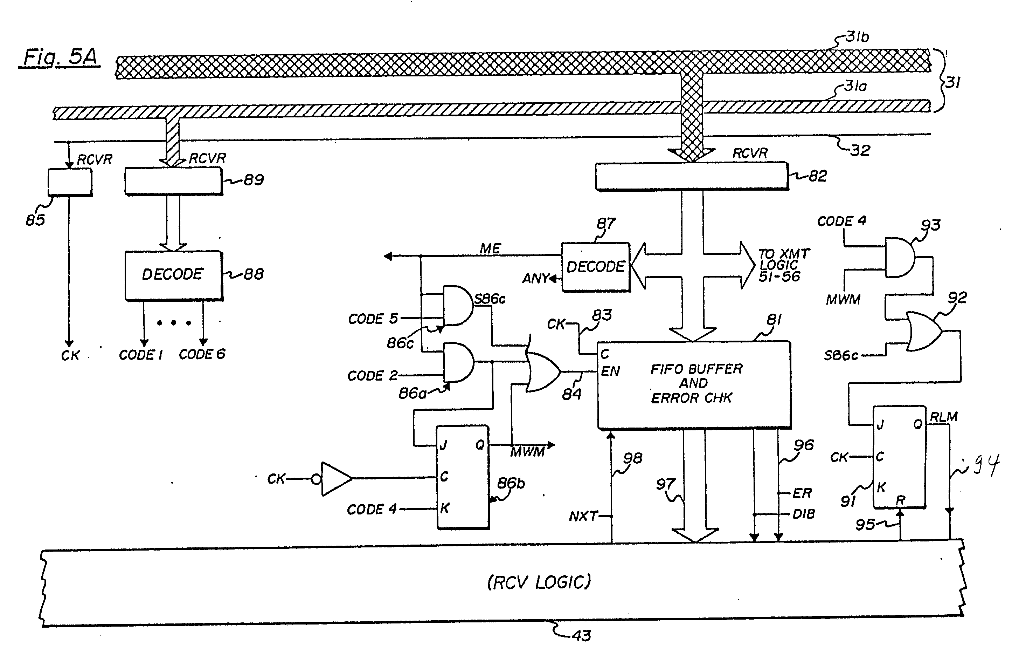

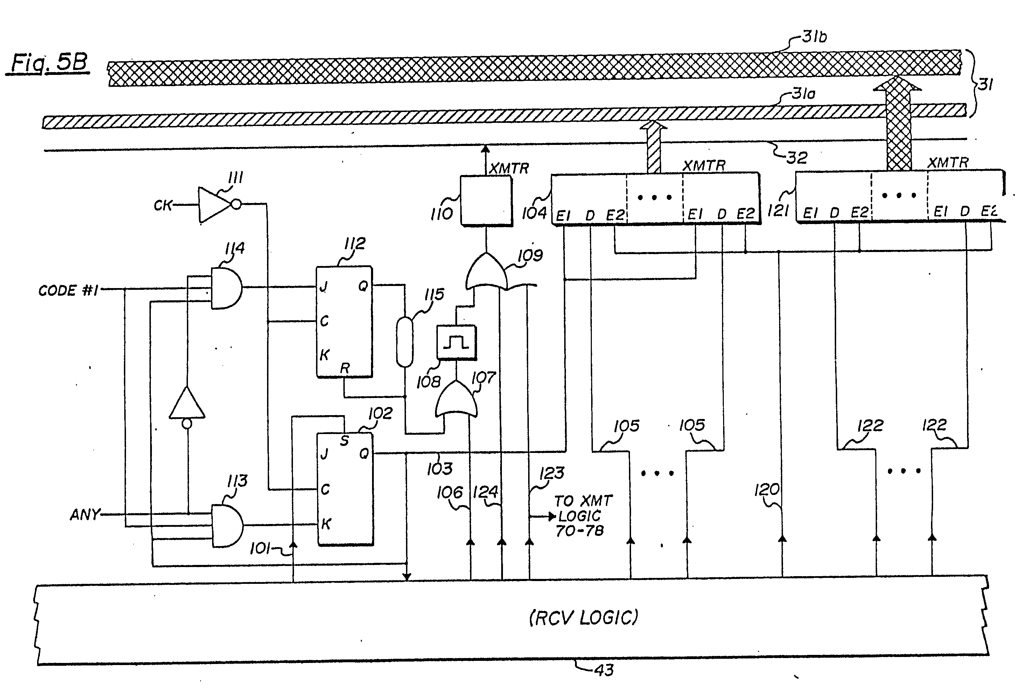

Consider now the logic circuitry of Figures 4A, 4B, 5A, and 5B. Figures 4A and 4B illustrate circuitry which will enable a device to transmit message on bus 31; whereas Figures 5A and 5B illustrate circuitry which will enable a device to receive messages from bus 31. A device can transmit and receive messages on bus 31 if it includes the logic circuitry of all of those figures.

First referring to Figure 4A, a request to use bus 31 is initiated within a device by sending a negative pulse on a line 41 to a flip-flop 42. This negative pulse is sent by a logic circuit 43 within the device. Logic circuit 43 is illustrated only as a "black box", since its exact makeup is really not relevant for the purposes of this invention. That make-up will depend upon whether the device is a digital computer, a tape, a printer, etc.; and a suitable "black box" could readily be configured by one skilled in those arts.

After flip-flop 42 is set, the logic of Figures 4A "looks" for a code #1 on lines 31A concurrently with a rising edge of clocking signal CK on line 32. To that end, the signals on lines 31A are passed through a set of receivers 44, decoded by a decoder 45, and sent to an "AND" gate 46. Gate 46 generates the J input signal for flip-flop 47 when flip-flop 42 is set and code #1 simultaneously is present on lines 31A. A clock signal for flip-flop 47 is provided by clocking signal CK on line 32, which flip-clop 47 receives through a receiver 48 and a pair of inverters 49 and 50.

When flip-flop 47 sets, it attempts to enable a plurality of AND gates 51. Each of those AND gates is also coupled to receive a signal on a set of lines 52 from logic circuit 43. That circuit generates a high logic signal on only a selectable one of the lines 52, and thus only the corresponding AND gates generates a high output signal.

A high output signal from one of the AND gates 51 enables a corresponding transmitter in a transmitter set 53. In turn, the enabled transmitter regenerates the signal on its D input on a corresponding one of the bus lines 31B.

Any signals on lines 31B are passed through a set of receivers 54 to a comparator 55. Comparator 55 also receives the one high signal on lines 52. If the signal on lines 52 indicates that this particular device has a higher priority than any of the other devices which are also generating a signal on one of the lines 31B, then comparator 55 sends a high output signal to an AND gate 56.

In turn, gate 56 sends a high signal to the K input of flip-flop 42. Flip-flop 42 will thus reset in response to that signal at the trailing edge of clocking CK on line 32. This resetting of flip-flop 42 is sensed and interpreted by logic circuit 43 as a granting of permission to transmit messages on bus 31.

Consider next the logic of Figure 4B. To transmit a message on bus 31, logic circuit 43 sends a high signal on a lead 61 to the E2 enable inputs of a set of transmitters 62 and to the previously described transmitters 53. Transmitters 62 are provided to generate signals on bus lines 31A which correspond to the signals generated by logic circuit 43 on a set of lines 63. Similarly, the signals which are generated on bus lines 31B correspond to those signals which are generated by logic circuit 43 on the previously described set of lines 52.

All of the clock signals of a message, except the last clock signal, are generated by sending a pulse on a lead 64 to an OR gate 65. Gate 65 drives a transmitter 66 which in turn drives the bus clock line 32. To generate a clock signal for the last word of a message, controller 43 sends a pulse on another lead 67.

Lead 67 couples to an inverter 70, which in turn triggers a flip-flop 71. Flip-flop 71 has its J input coupled high, and thus the flip-flop sets after the last word of a message has been sent. The Q output of flip-flop 71 couples to a pair of flip-flops 72 and 73 through respective AND gates 74 and 75. These two flip-flops monitor the next message which is sent on the bus by the receiving device. If the receiving device sends either a message to a third party, or broadcasts a poll code, then flip-flop 72 sets; whereas if the receiving device sends a message back to the transmitting device, then flip-flop 73 sets.

A setting of flip-flop 72 is interpreted by logic circuit 43 as meaning that is transactions on the bus are complete. On the other hand, a setting of flip-flop 73 is interpreted by logic circuit 43 as meaning that it has been given back control of bus 31. Lines 76 provides a means whereby logic circuit 43 can sense the state of flip-flops 72 and 73; and line 77 provides a means whereby those flip-flops can be reset after their state is sensed. A NOR gate 78 provides a means for automatically resetting flip-flop 71 after one of the flip-flops 72 and 73 have set.

Next, consider the logic of Figure 5A. It operates to receive messages from bus 31 which were sent as described above. That logic includes a first-in first-out (FIFO) buffer 81 which stores signals on bus 31B which it receives through a set of receivers 82. Those signals are stored in FIFO 81 only in response to the simultaneous occurrence of clock signal CK on lead 83 and a high signal on a lead 84. Signal CK on lead 83 is simply the output of a receiver 85 for the bus clock; whereas the other signal on lead 84 is generated by a logic circuit 86.

Gate 86A senses the simultaneous occurrence of code #2 on bus lines 31A and a device address which corresponds to this particular device. A decoder 87 provides for the decoding of that device address. The output of AND gate 86A also sets a flip-flop 86b which remains set until the simultaneous occurrence of a code #4 on bus lines 31A and the trailing edge of clock signal CK. Flip-flop 86b thus provides an enabling signal to FIFO 81 for all words which follow the first word of a multi-word message. Also, AND gate 86C provides an enabling signal to FIFO 81 during the receipt of a single word message.

In order for logic circuit 43 to determine that it has received the last message, a flip-flop 91 is provided. The J enabling signal for flip-flop 91 is generated by an OR gate 92. It has input signal S86c which is generated by the previously described AND gate 86C. A second input signal to OR gate 92 is generated by an AND gate 93 which senses the receipt of the last word of a multi-word message.

Logic circuit 43 senses the set condition of flip-flop 91 on a lead 94, and thereafter resets flip-flop 91 by generating a pulse on a lead 95. It then determines whether the message was loaded into a full buffer by sensing a signal ER on a lead 96 from FIFO 81. Based on the state of signal ER, logic circuit 43 can determine how to respond over bus 31 to the received message.

In addition, circuit 43 may also unload all or a portion of the received message from FIFO 81 prior to generating its response on bus 31. To take a word from FIFO 81. logic circuit 43 merely samples the FIFO output lines 97, and then sends a pulse on line 98 which signals the FIFO to put the next word of the message on the FIFO output lines. In this manner, proper message sequences and context can be checked for.

After logic circuit 43 determines what its response on bus 31 is to be, it utilizes the logic of Figure 5B to implement that response. In particular, to initiate a polling cycle on bus 31, logic circuit 43 sends a pulse on a line 101 to set a flip-flop 102. Flip-flop 102 couples via a lead 103 to the E1 enable inputs of a set of transmitters 104 for bus lines 31A. With flip-flop 102 providing a high signal to the E1 enable inputs, the transmitters 104 pass any signals on a set of lines 105 onto bus lines 31A. Thus for a polling operation, logic circuit 43 generates a code #1 on the line 104.

Thereafter, logic circuit 43 sends a pulse on a lead 106. That pulse passes through an OR gate 107 to a pulse circuit, such as a one-shot, 108. Then the output of pulse circuit 108 passes through an OR gate 109 and a transmitter 110 to form the bus clocking signal. One-shot 108 generates clock signal CK with a width $\Delta t1$ as was previously described in conjunction with the timing diagrams of Figures 3A and 3B.

Clocking signal CK then passes from receiver 85 of Figure 5A through an inverter 111 to the trigger input of flip-flop 102 and 112. If any of the devices on bus 31 are generating a steady signal on lines 31B when the trailing edge of signal CK occurs, then flip-flop 102 resets. This is because flip-flop 102 has its K input coupled to the output of AND gate 113 whose inputs are code #1 from decoder 88, and an "ANY" signal from decoder 87 which indicates if a steady signal is present on any of the lines 31B. Resetting flip-flop 102 terminates the polling sequence.

Conversely, if no device on bus 31 generates a steady signal on leads 31B in response to the polling code, then flip-flop 102 remains set and flip-flop 112 also sets. This is because the J input of flip-flop 112 is fed by an AND gate 114 whose inputs are code #1 and the inverse of the "ANY" signal. Flip-flop 112 has its Q output passed through a delay line 115 to produce the previously described time interval of $\Delta t2$ between polling cycles. Then after that time interval, the signal from delay line 115 resets flip-flop 112 and retriggers pulse circuit 108, which starts a new polling cycle.

Next, consider the situation where the receiving device does not elect to respond by initiating a polling sequence; but instead responds by sending a single word message to a device on the bus. Under those conditions, logic circuit 43 sets a high signal on a lead 120 which enables transmitters 104 and 121. Then logic circuit 43 generates a code on leads 105 and generates the address of the receiving device any other information which is to be sent on leads 122. Next, logic circuit sends a pulse on a line 123 to generate a clocking signal for bus 31. Alternatively, multiple word messages may be sent to any device on bus 31 by generating a pulse on a lead 124 for all of the words of the message except the last word, and then generating a pulse on lead 123 for the last word of the message.

A preferred embodiment of the invention has now been described in detail. In addition, however, various changes and modifications may be made to these details without departing from the nature and spirit of the invention. Thus it is to be understood that the invention is not limited to said details but as defined by the appended claims.

**Claims**

1. A digital data processing system comprising a plurality of digital devices (30-1 ... 30-N) interconnected by a bus (31) and a clock line (32), wherein a clock signal is transmitted on said clock line by any device which is transmitting data to another of said devices over said bus, and wherein a polling signal is transmitted on said bus by said other device if it receives said data and does not require to respond to it, characterised in that said bus comprises two sets of lines (S31a and S31b), said polling signal (Code 1) being transmitted as a parallel code on said first set of lines (S31a), and said data being transmitted in parallel on said second second set of lines (S31b), in that while said data is being transmitted on said second set of lines, a parallel code is also transmitted on said first set of lines (S31a) identifying at each instant whether the data constitutes the first word (Code 2), the last word (Code 4) or an intermediate word (Code 3) of a message, in that a respective line in said second set is allocated to each of said devices (30-1 ... 30-N) and in that any one of said devices requiring to transmit data examines said first set of lines to ascertain that said polling signal is being transmitted and thereafter applies a steady signal to its respective allocated line in said second set, whereupon the device transmitting said polling signal ceases to do so.

2. A digital data processing system according to Claim 1, characterised in that a clock signal is transmitted on said clock line by any of said devices which is transmitting said polling signal.

3. A digital data processing system according to Claim 2, characterised in that the clock signal transmitted by a device which is transmitting the polling signal is of longer duration than the clock signal transmitted by a device which is transmitting data.

4. A digital data processing system according to any of the preceding Claims, characterised in that, if a device requires to transmit a signal word message, it transmits a special code (Code 5) on said first set of lines.

5. A digital data processing system according to any of the preceding Claims, characterised in that the data transmitted on said second set of lines also includes information defining the address for which the data is intended.

## Patentansprüche

1. Digitale Datenverarbeitungsanlage mit mehreren digitalen Einrichtungen (30-1 ... 30-N), die über einen Bus (31) und eine Taktleitung (32) miteinander verbunden sind, wobei ein Taktsignal von einer Einrichtung, die Daten an eine andere der Einrichtungen über den Bus überträgt, an die Taktleitung abgegeben wird, und wobei ein Datenabrufsignal von der anderen Vorrichtung an den Bus abgegeben wird, wenn sie die Daten empfängt und keine Antwort darauf erforderlich ist, dadurch gekennzeichnet, daß der Bus zwei Leitungssätze (S31a und S31b) enthält, daß das Datenabrufsignal (Code 1) als Parallelcode auf dem ersten Leitungssatz (S31a) übertragen wird und die Daten parallel auf dem zweiten Leitungssatz (S31b) übertragen werden, daß während der Datenübertragung auf dem zweiten Leitungssatz ein Parallelcode ebenfalls auf dem ersten Leitungssatz (S31a) übertragen wird, der zu jedem Zeitpunkt identifiziert, ob die Daten das erste Wort (Code 2), das letzte Wort (Code 4) oder ein Zwischenwort (Code 3) einer Nachricht bilden, daß eine entsprechende Leitung in dem zweiten Leitungssatz jeder der Einrichtungen (30-1 ... 30-N) zugeordnet ist und daß irgendeine der Einrichtungen, die eine Datenübertragung fordert, den ersten Leitungssatz überprüft, um festzustellen, daß das Datenabrufsignal übertragen wird und danach ein Dauersignal an seine entsprechend zugewiesene Leitung in dem zweiten Leitungssatz abgibt, woraufhin die das Datenabrufsignal übertragende Einrichtung die Übertragung beendet.

2. Digitale Datenverarbeitungsanlage nach Anspruch 1, dadurch gekennzeichnet, daß ein Taktsignal auf der Taktleitung von einer der Einrichtungen übertragen wird, die das Datenabrufsignal überträgt.

3. Digitale Datenverarbeitungsanlage nach Anspruch 2, dadurch gekennzeichnet, daß das von einer das Datenabrufsignal übertragenden Einrichtung abgegebene Taktsignal eine längere Dauer aufweist als das von einer Daten übertragenden Einrichtung abgegebene Taktsignal.

4. Digitale Datenverarbeitungsanlage nach einem der vorstehenden Ansprüche, dadurch gekennzeichnet, daß eine Einrichtung, die die Übertragung einer Ein-Wort-Nachricht wünscht, einen Spezialcode (Code 5) an den ersten Leitungssatz überträgt.

5. Digitale Datenverarbeitungsanlage nach einem der vorstehenden Ansprüche, dadurch gekennzeichnet, daß die auf dem zweiten Leitungssatz übertragenen Daten auch eine Information enthalten, die die Adresse festlegt, für die die Daten bestimmt sind.

## Revendications

1. Système de traitement de données numériques comprenant un ensemble de dispositif numériques (30-1 ... 30-N) interconnextés par un bus (21) et une ligne d'horloge (32) qui transmet un signal d'horloge provenant de n'importe quel dispositif qui transmet des données à un autre dispositif par ce bus, un signal de polling étant transmis au bus par l'autre dispositif s'il reçoit les données et ne demande pas à répondre, système caractérisé en ce que le bus se compose de deux ensembles de lignes (S31a et S31b), le signal de polling (code #1) étant transmis comme code parallèle sur le premier ensemble de lignes (S31a) et les données étant transmises en parallèle sur le second ensemble de lignes (S31b), et lorsque les données sont transmises par le second ensemble de lignes, un code parallèle est également transmis sur le premier ensemble de lignes (S31a) indentifiant à chaque instant si les données constituent le premier mot (code #2), le dernier mot (code #4) ou un mot intermédiaire (code #3) d'un message, une ligne respective du second ensemble étant attribuée à chacun des dispositifs (30-1 ... 30-N) et en ce que n'importe quel dispositif qui demande à transmettre les données examine le premier ensemble de lignes pour s'assurer que le signal de polling est transmis, puis applique un signal permanent à la ligne respective qui lui est attribuée et appartenant au second ensemble, puis le dispositif transmettant ce signal de polling cesse de le faire.

2. Système de traitement de données numériques selon la revendication 1, caractérisé en ce qu'un signal d'horloge est transmis à la ligne d'horloge par n'importe quel dispositif qui transmet le signal de polling.

3. Système de traitement de données numériques selon la revendication 2, caractérisé en ce que le signal d'horloge transmis par un dispositif qui transmet le signal de polling a une durée plus longue que le signal d'horloge transmis par un dispositif qui transmet des données.

4. Système de traitement de données numériques selon l'une quelconque des revendications précédentes, caractérisé en ce que si un dispositif demande à transmettre un message à un seul mot, il transmet un code spécial (code #5) sur le premier ensemble de lignes.

5. SYstème de traitement de données numériques selon l'une quelconque des revendications précédentes, caractérisé en ce que les données transmises sur le second ensemble de lignes comprennent également l'information définissant l'adresse à laquelle sont destinées les données.

0 075 625

Fig. 1A  PRIOR ART

Fig. 1B  PRIOR ART

1

Fig. 2

| DEVICE #1 | 30-1 | DEVICE #2 | 30-2 | DEVICE #3 | 30-3 | ... | DEVICE #N | 30-N |

CK
32
31

Fig. 3A

Δt1

CK    A          B                          D          C

S31a    A    CODE#1    B    CODE #2 | CODE #3 | CODE #3 | CODE #4    D    CODE#1    C

S31b    B&C    B    (TO D)    C    C

t0  t1  t2    t3    t4    t5    t6    t7  t8  t9    t10

Fig. 3B

Δt1  Δt2  Δt1

CK    C        C        E        C                    F        G

S31a    C    CODE #2 | CODE #4    E    CODE #5    C    CODE #1    F    CODE #5    G    CODE #1

S31b    C    (TO E)    F    (TO C)    C&F    F    (TO G)    G    (TO H)

t10 t11    t12    t13    t14    t15 t16  t17 t18    t19    t20

FIG.4A

Fig. 4B

Fig. 5A

(RCV LOGIC)

Fig. 5B